Europäisches Patentamt

**European Patent Office**

**Office européen des brevets**

(19)

(11) Numéro de publication: **0 086 923**
**B1**

(12) ## FASCICULE DE BREVET EUROPEEN

(45) Date de publication du fascicule du brevet:
**24.07.85**

(21) Numéro de dépôt: **82420027.3**

(22) Date de dépôt: **24.02.82**

(51) Int. Cl.⁴: **B 22 C 1/16,** B 22 C 3/00,
B 22 D 41/02, F 27 D 1/00,
C 04 B 9/04

(54) **Forme, procédé et composition pour le moulage par soufflage du revêtement réfractaire consommable d'un récipient destiné à contenir du métal en fusion.**

(43) Date de publication de la demande:
**31.08.83 Bulletin 83/35**

(45) Mention de la délivrance du brevet:
**24.07.85 Bulletin 85/30**

(84) Etats contractants désignés:
**AT BE CH DE FR GB IT LI LU NL SE**

(56) Documents cités:
**EP - A - 0 042 767**
**EP - A - 0 042 897**
**DE - A - 2 745 271**
**DE - A - 3 010 868**
**GB - A - 1 374 493**
**US - A - 3 944 193**

**Chemical Abstracts, vol. 94, no. 8, April 20-May 4, 1981, Columbus, Ohio, USA, KUROSAKI REFRACTORIES CO. LTD., "Refractory for a sliding plate to control a molten metal current", page 298, colonne 1, abstract no. 144267f**

(73) Titulaire: **AIKOH CO. LTD.,** 1-39, Ikenohata 2-chome Taito-ku, Tokyo (JP)

(72) Inventeur: **Takashima, Masaru, 1047, Inokata, Komae-shi Tokyo (JP)**
Inventeur: **Matsuyama, Shigeru, 998-340, Inuzuka, Oyama-shi Tochigiken (JP)**
Inventeur: **Hayashi, Yoshihiro, 139, Kokubu 1-chome, Ohtsu-shi Shiga-ken (JP)**
Inventeur: **Ito, Hisaji, 6-8, Nango 1-chome, Ohtsu-shi Shiga-ken (JP)**
Inventeur: **Fujita, Kotaro, 5-5, Showa-machi, Suita-shi Osaka-fu (JP)**
Inventeur: **Inai, Kenji, 19-15, Hiratsu 1-chome, Ohtsu-shi Shiga-ken (JP)**
Inventeur: **Takemoto, Shoji, 104-1, Tagami Sekinozu-cho, Ohtsu-shi Shiga-ken (JP)**

(74) Mandataire: **Maureau, Pierre, Cabinet GERMAIN & MAUREAU Le Britannia - Tour C 20, Boulevard E. Déruelle, F-69003 Lyon (FR)**

## Description

La présente invention concerne des perfectionnements à une forme pour la confection par soufflage du revêtement consommable d'un récipient destiné à recevoir du métal en fusion; elle concerne aussi un procédé pour confectionner ce revêtement en utilisant ladite forme et une composition de revêtement utilisée avec ce procédé.

Les récipients destinés à recevoir un métal en fusion, comme les poches de coulée et les poches intermédiaires servant au transvasement de la fonte et de l'acier fondu, comportent une enveloppe métallique, dont la face interne est recouverte d'un garnissage réfractaire formé de briques ou d'un matériau moulable, lui-même recouvert d'un revêtement consommable servant aussi de couche d'isolation thermique. Ce revêtement réfractaire consommable ne peut servir que pour une seule charge; il faut le renouveler pour la charge suivante. A cause de ce remplacement fréquent, l'efficacité des moyens utilisés pour la confection de ce revêtement est un des facteurs importants qui déterminent la capacité de production des installations sidérurgiques. Le processus de cette confection a été mécanisé pour en accélérer le déroulement et l'on utilise un procédé par coulage, un procédé par moulage à l'aide d'une forme et vibrage et d'autres procédés similaires. Le matériau réfractaire doit en outre être damé et si l'on veut qu'il soit suffisamment dur, il fait utiliser une forte pression ou une forme très lourde et il faut consacrer davantage de temps à ce compactage, de sorte qu'un appareillage et/ou un dispositif à pression spécifiques sont nécessaires pour soulever la forme et qu'il faut habituellement installer quelques appareils à former les revêtements d'une capacité relativement grande pour augmenter le rendement, bien que la sécurité de fonctionnement exige un grand espace de travail.

Une autre solution consiste à utiliser des panneaux qui retiennent la chaleur, solution dans laquelle un matériau réfractaire est tout d'abord moulé sous forme de panneaux, puis séché, mais on sait que la corrosion agit en profondeur dans le matériau réfractaire du revêtement après plusieurs charges et qu'il faut prendre des dispositions fastidieuses pour le réparer et pour couper, ordonner, faire joindre et adhérer lesdits panneaux, de sorte que ce procédé ne contribue pas à diminuer le temps passé au remplacement du revêtement.

L'invention a donc pour objet d'éliminer les divers inconvénients des procédés traditionnels. Elle prévoit à cet effet d'utiliser une forme qui comporte un corps principal muni de trous de soufflage et d'un orifice d'échappement, dont la face inférieure et la face périphérique ont la même forme et les mêmes dimensions que les faces internes du revêtement consommable, une bride qui s'étend à peu près horizontalement vers l'extérieur à la périphérie de l'extrémité supérieure du corps principal, une pluralité de supports actionnés vers le bas à partir de la bride et des joints d'étanchéité amortisseurs situés au-dessous de la bride.

Le procédé selon l'invention consiste à introduire dans le récipient, par son extrémité ouverte, la forme qui vient d'être décrite et à l'y positionner de façon à ménager entre elle et le récipient un espace vide correspondant au revêtement à confectionner, puis à souffler dans cet espace un mélange constitué par un agrégat, une résine autodurcissable et éventuellement un durcisseur.

La composition selon l'invention comporte 45 à 97% d'un agrégat ayant une granulométrie inférieure à 3 mm de passage de crible et 3 à 15% d'un liant constitué par une résine autodurcissable, c'est-à-dire susceptible de durcissement à température ambiante et contenant plus de 70% d'ingrédients non volatils à 125° C.

De toute façon, l'invention sera bien comprise à l'aide de la description qui suit, en référence au dessin schématique annexé, représentant, à titre d'exemple non limitatif, une forme d'exécution de cette forme:

la fig. 1 est une vue en coupe verticale d'une forme de soufflage, montrant comment positionner celle-ci dans une poche de coulée continue dont le revêtement consommable doit être réparé;

la fig. 2 est une vue similaire à la fig. 1, montrant une variante de réalisation de ladite forme.

A la fig, 1, un garnissage réfractaire 2 est appliqué contre la face interne de l'enveloppe 1 d'une poche de coulée continue et la hauteur d'une forme 3 est réglée par extension ou contraction d'un support 4 de façon que la face périphérique et la face inférieure de la forme 3 définissent entre elles et le garnissage 2 un espace 8 pour un revêtement consommable appliqué sur la face intérieure de ce garnissage. Le support 4 est monté de façon qu'il puisse agir sur la face inférieure d'une bride 9 qui s'étend à peu près horizontalement vers l'extérieur depuis la périphérie de l'extrémité supérieure de la forme 3 et il est actionné par un système de vérins, d'engrenages, de biellettes, de levier, ou tout autre système utilisant la pression d'un fluide comme l'air, l'eau, l'huile, etc. Il est prévu en outre un joint étanche à l'air et formant amortisseur 5 sous la bride 9 pour empêcher que le matériau envoyé par soufflage dans l'espace 8 pour y être moulé soit éjecté. Ce joint amortisseur 5 est fait d'un matériau élastique comme le caoutchouc ou une matière plastique et, grâce au poids de la forme elle-même, il empêche l'espace 8 de communiquer avec l'extérieur autrement que par les trous de soufflage 6a, 6b et que par un orifice de sortie 7. La forme 3 est faite d'un matériau rigide, comme un métal, du bois ou certaines matières plastiques et elle n'est pas susceptible de se déformer sous l'action d'une pression statique ou dynamique au moment du soufflage. Il suffit que son propre poids la maintienne en position une fois mise en place, de sorte que lorsque sa paroi est peu épaisse, on peut avantageusement lui adjoindre un poids mort. On l'amène tout d'abord à l'aplomb de la poche de coulée en la suspendant à un appareil de levage, par exemple une grue, puis on la laisse descendre dans l'espace intérieur de la poche en lui donnant une position horizontale correspondant exactement à l'espace vide à laisser, puis on règle la hauteur des supports 4 de façon que l'espace 8, et donc le revêtement, ait, dans le fond de la poche de coulée, la même épaisseur que contre la paroi périphérique ou n'importe quelle autre épaisseur désirée. Pour effectuer le moulage du revêtement à l'aide de la forme 3, on projette le matériau réfractaire dans l'espace 8 à travers les trous de soufflage 6a, 6b à l'aide d'un gaz sous forte pression, par exemple de l'air comprimé. Le matériau arrive par une conduite non représentée. Dans la pratique, on commence le soufflage par le trou 6a afin de mouler en premier la partie du fond, puis on monte progressivement, en commençant par les trous 6b les plus bas. L'air refoulé par la présence du matériau réfractaire dans l'espace 8 s'échappe par le trou 7 situé à la partie supérieure de la forme et cet orifice 7 est muni d'une plaque munie de minces fentes, pour empêcher l'éjection des solides. Une pression d'air de plus de 2 kg/cm² est suffisante pour compacter le matériau. Comme on utilise avec le matériau réfractaire un liant qui durcit immédiatement après le soufflage, on peut pratiquement enlever la forme aussitôt qu'on a fini de souffler. La petite quantité d'eau contenue dans le matériau moulé s'évapore par suite du caractère exothermique de la réaction, de sorte qu'une opération de séchage n'est pas nécessaire.

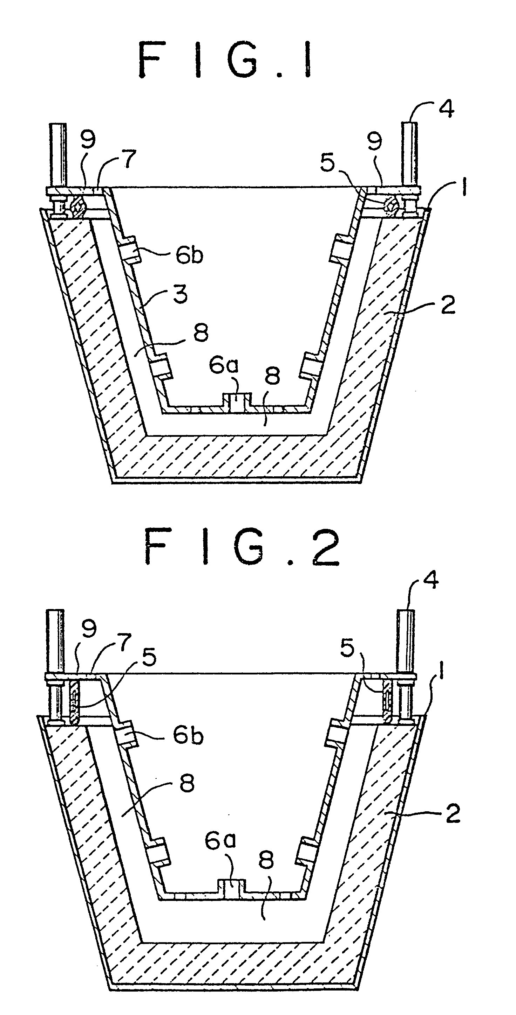

On peut, selon l'invention utiliser conjointement le procédé de soufflage qui vient d'être décrit et un procédé traditionnel avec vibrage. On peut voir à la fig. 2 que dans le fond de la poche l'épaisseur de l'espace 8 est plus grande que contre la paroi périphérique. On remplit cet espace de matériau, puis on actionne le vibreur (non représenté) tout en appliquant le poids de la forme pour former la partie périphérique du revêtement, le matériau soufflé dans cette partie se mélangeant à celui qui est refoulé du fond sous le poids de la forme pour compléter la formation du revêtement.

Une composition pour le revêtement réfractaire selon l'invention doit adhérer fortement au garnissage du récipient pour métal en fusion, se présenter sous une forme pulvérulente ou granuleuse pour le soufflage, contenir une proportion d'eau faible ou même nulle et sécher rapidement après moulage. En d'autres termes, cette composition contient un agrégat et un liant à base de résine autodurcissable et éventuellement contenant un agent durcisseur. Pour accélérer le démarrage de la réaction de durcissement, on peut ajouter une faible proportion d'acide au liant résineux autodurcissable juste avant le soufflage du matériau. On peut ajouter par exemple à une résine phénolique environ la moitié autant d'un mélange d'acide xylènesulfonique et d'une faible proportion d'un acide minéral.

L'agrégat est un matériau réfractaire acide, neutre ou basique, comme la silice, le sable siliceux, la chamotte, le graphite, l'alumine, le corindon, la mullite, la spinelle, la dolomite, la magnésie, les oxydes de calcium, de chrome, de zirconium, la brique ou des minerais, matériau d'une granulométrie inférieure à 3 mm d'ouverture de maille et dont la proportion est comprise entre 45 et 97%. Une granulométrie supérieure à 3 mm provoque une mauvaise distribution au soufflage, de sorte qu'elle n'est pas à préférer. Une proportion de ce matériau supérieure à 97% a pour effet que le liant résineux n'ajoute rien à la résistance mécanique du matériau réfractaire à la température ambiante pour qu'il ne puisse, en tant que matériau moulé par soufflage, se désagréger lorsqu'on retire la forme, même sous l'effet d'une force extérieure, ou il perd de sa résistance mécanique lorsqu'on verse de l'acier en fusion dans la poche, permettant à l'agrégat de se désagréger à cause de la combustion. Par contre, si la proportion d'agrégat est inférieure à 45%, les propriétés réfractaires du revêtement sont médiocres, ce qui rend ce dernier inutilisable.

On peut mentionner come liant résineux autodurcissable les résines phénoliques, les résines furaniques ou les résines de polyester insaturées, mais on utilise dans la plupart des cas un mélange qui améliore la vitesse de durcissement par addition d'un durcisseur constitué par 50% environ d'acide xylène-sulfonique à la résine phénolique. Le liant à base de résine autodurcissable doit être présent dans une proportion d'au moins 3%. Au-dessous de ce pourcentage, la résistance mécanique est imparfaite, quelles que soient la granulométrie et la forme de l'agrégat et, même si la proportion dépasse 15%, la résistance mécanique n'est pas améliorée.

De préférence, le durcisseur est utilisé pour que le matériau de moulage durcisse en un temps beaucoup plus court après qu'il a été incorporé, de sorte que, par exemple, il peut être ajouté à la composition dans l'alimenteur à vis, ou bien la résine et le durcisseur peuvent être introduits simultanément dans l'alimenteur par des orifices séparés. La sortie de l'alimenteur est située près de la buse de soufflage et la composition est envoyée par de l'air comprimé à travers la conduite lorsqu'elle est projetée dans l'espace entre la forme et la paroi du récipient. On enlève la forme une fois que la composition s'est durcie au point de ne plus pouvoir se détacher de la paroi du récipient lorsqu'on retire la forme. Il est également possible d'utiliser en combinaison la résine autodurcissable et une résine thermodurcissable, le séchage et le durcissement s'effectuant en soufflant un gaz chaud à la surface du revêtement après avoir retiré la forme, ce qui a pour effet de donner à la couche réfractaire du revêtement une plus grande résistance mécanique. Parmi les diverses résines thermodurcissables existantes, celle du commerce qui se prête le mieux à cet usage est une composition dans laquelle la résine phénolique contient moins de 20% d'hexaméthylènetétramine comme durcisseur.

Si la fluidité est trop grande, la résine autodurcissable et la résine thermodurcissable pénètrent toutes dans les pores de l'agrégat, quand ce dernier est poreux, ce qui entraîne un supplément de malaxage. En conséquence, on diminue la fluidité en diminuant la proportion de solvant dans les résines et l'autodurcissable, tout comme la thermodurcissable, doivent contenir plus de 70% d'ingrédients non volatils à 135° C, ce qui permet à la fluidité de ne pas être trop grande à la température ambiante ou à la température de durcissement, suivant le type de résine. Pour maintenir la résistance mécanique du revêtement réfractaire lors du contact avec le métal en fusion, on utilise en outre comme liant secondaire un liant inorganique choisi parmi l'heptahydrate sulfate de magnésium ($MgSO_4 \cdot 7H_2O$), le phosphate de sodium, le phosphate de magnésium, l'acide borique, le borax et le métasilicate de sodium. Par exemple, l'heptahydrate sulfate de magnésium libère l'eau des cristaux à une température d'environ 70° C pour donner au mélange une certaine humidité, d'où il résulte une résistance à l'état cru, et il perd cette eau à 200° C environ, de sorte qu'il durcit et que la résistance de la couche réfractaire peut être maintenue même après que le liant résineux a été consumé et perdu son pouvoir adhésif lorsqu'on a préchauffé le récipient pour métal en fusion. Avec une proportion de liant secondaire inférieure à 3%, le pouvoir adhésif n'est pas satisfaisant, mais la résistance mécanique de la couche réfractaire n'augmente pas au-delà d'une proportion de 15%, de sorte qu'au-delà de ce pourcentage, la présence de ce liant est inutilement coûteuse.

La composition réfractaire peut contenir en outre comme matériau d'isolation thermique une ou plusieurs des substances fibreuses réfractaires choisies parmi l'amiante, la laine de roche, la laine de verre, les fibres de kaolin, la laine de laitier, les fibres de carbone, de zirconium ou de carbure de silicium, ou parmi des matières réfractaires poreuses, comme la terre d'infusoires, la perlite, l'alumine creuse et la pierre ponce, ou parmi des substances organiques comme la sciure, les copeaux de bois, les fibres de cellulose, les fibres synthétiques, le charbon de bois, le charbon et le coke. Ces substances diminuent la densité apparente lors du moulage du revêtement ou sont brûlées lorsque du métal en fusion est versé dans le récipient, ce qui diminue la densité apparente totale en laissant des pores améliore encore la retenue de la chaleur par la couche réfractaire. Comme la densité apparente est déjà diminuée par la présence des résines à une température élevée, la proportion de matériau d'isolation thermique ne doit pas dépasser 2% pour maintenir la résistance mécanique à un niveasu acceptable.

L'invention sera mieux comprise à l'aide de la description d'une forme d'exécution concrète qui constitue un exemple non limitatif:

### Récipient pour métal en fusion

Largeur 500 mm × hauteur 750 mm × longueur 600 mm (dimensions intérieures);
Poche de coulée continue (acier).
Le revêtement réfractaire a une épaisseur de 40 mm mesurée à partir de la surface du garnissage permanent de briques.

### Malaxeur

Malaxeur à cylindre du type broyeur à meules verticales.

### Machine d'alimentation

Mécanisme dans lequel une conduite d'amenée d'air comprimé communique avec l'orifice de soufflage d'un tuyau raccordé à la partie inférieure d'un réservoir par l'intermédiaire d'une vis transporteuse.

### Mélanges (parties en poids)

1. Sable silicieux d'une granulométrie inférieure à 3 mm ∅ (état des particules, porosité: 1,2%): 100 parties, résine liquide autodurcissable (résine phénolique, ingrédients non volatils: 75%) 4 parties, durcisseur à base d'acide xylènesulfonique (méthanol: 15%, acide nitrique: 5%, pureté: 80%): 2 parties.
2. Poudre à briques de magnésie de granulométrie inférieure à 3 mm ∅ (état des particules, porosité: 24%): 100 parties, résine autodurcissable (résine phénolique, ingrédients non volatils: 75%, xylole: 25%): 5 parties, résine thermodurcissable (ingrédients non volatils: 90%, hexamine: 10%): 5 parties, acide xylènesulfonique comme durcisseur (méthanol: 15%, acide nitrique: 5%, pureté: 80%) 2,5 parties, heptahydrate sulfate de magnésium: 5 parties.

### Malaxage:

Dans le mélange 1, on verse le sable siliceux dans la trémie de la machine d'alimentation, tandis que la résine autodurcissable et le durcisseur sont ajoutés séparément par la vis transporteuse à la partie inférieure.

Dans le mélange 2, la poudre à briques, la résine thermodurcissable et le sulfate de magnésium sont versés dans le récipient d'un mélangeur, le malaxage dure 5 min, puis on verse le mélange dans la trémie de la machine d'alimentation, tandis que, comme pour le mélange 1, la résine autodurcissable et le durcisseur sont ajoutés séparément par la vis transporteuse à la partie inférieure.

### Soufflage:

Le matériau de moulage est soufflé à travers des tuyaux de 19,05 mm de diamètre sous une pression d'air de 5 kg/cm², à partir d'une buse de soufflage directement raccordée à la sortie de la vis transporteuse, dans l'espace défini entre le garnissage de briques réfractaires de la poche de coulée et la forme utilisée, des vibrations d'une fréquence de 1500 Hz étant communiquées à la forme.

### Enlèvement de la forme:

La forme est enlevée 10 min après le soufflage.

### Séchage:

1. 30 min de séchage à l'air chauffé à une température de 100 à 120° C;
2. 30 min de séchage à l'air chauffé à une température de 150 à 200° C.

### Propriétés physiques du revêtement consommable moulé

On prélève aux angles des couches de revêtement moulé des éprouvettes de 50 mm de diamètre sur 50 mm de hauteur pour mesurer leur porosité, leur densité apparente, leur conductivité thermique et leur résistance à la compression à chaud.

Les valeurs moyennes obtenues sur dix charges sont indiquées dans le tableau ci-dessous:

| | 1 | 2 |
|---|---|---|
| Porosité | 23% | 40% |
| Densité apparente | 2,35 | 1,95 |
| Conductivité thermique | 0,75 kcal/mHrC | 0,35 kcal/mHrC |
| Résistance à la compression à chaud (1500° C) | 0,17 kg/cm² | 0,25 kg/cm² |

Dans l'échantillon 1 la conductivité thermique est relativement grande, mais le coût de revient est faible, de sorte que cette composition de revêtement convient à un four électrique, où la température est réglable à volonté. Par contre, pour l'échantillon 2, les conditions sont inverses et le revêtement retient bien la chaleur, de sorte qu'il convient parfaitement à un convertisseur ou à un four à sole, où il est assez difficile de régler la température.

Le moulage par soufflage selon l'invention pourrait être exécuté en une heure par un seul ouvrier. On a constaté en outre que ce revêtement consommable ne détériore pas le garnissage réfractaire de la poche de coulée continue, même si l'on exécute cinq coulées continues.

## Revendications

1. Forme pour le moulage par soufflage du revêtement intérieur d'un récipient pour métaux en fusion, caractérisé en ce qu'il comporte un corps principal (3) muni de trous de soufflage (6a, 6b) et d'un orifice d'échappement (7), la face périphérique et la face inférieure de ce corps ayant les mêmes dimensions et les mêmes formes que les faces intérieures correspondantes du revêtement à mouler, une bride (9), qui s'étend à peu près horizontalement vers l'extérieur à partir de la périphérie de l'extrémité supérieure du corps (3), une pluralité de supports (4) qui sont actionnés vers le bas de la bride et des joints d'étanchéité formant amortisseurs (5) placés au-dessous de la bride.

2. Forme selon la revendication 1, caractérisée en ce que le corps principal (3) est muni d'un poids mort.

3. Forme selon l'une des revendications 1 ou 2, caractérisée en ce que le corps principal est muni d'un vibreur produisant des vibrations d'une fréquence comprise entre 1000 et 10 000 vibrations à la minute et d'une amplitude comprise entre 0,1 et 5 mm.

4. Forme selon l'une des revendications 1 à 3, caractérisée en ce que les supports (4) soutiennent la forme dans le récipient, à la partie supérieure de celui-ci, par la pression d'un fluide, des engrenages, des biellettes, des leviers, etc., et en ce qu'ils sont des corps déployables de façon que le poids total de la forme soit supporté par les joints amortisseurs, leur longueur pouvant être raccourcie de façon que leur pouvoir portant soit nul.

5. Forme selon l'une des revendications 1 à 4, caractérisée en ce que chaque joint d'étanchéité formant amortisseur est un corps annulaire continu et élastique.

6. Procédé pour réaliser le revêtement intérieur d'un récipient destiné à recevoir du métal en fusion à l'aide de la forme selon la revendication 1, caractérisé en ce qu'il consiste à introduire ladite forme dans le récipient (1, 2) par son extrémité ouverte et à l'y positionner de façon à ménager entre elle et le récipient un espace vide correspondant au revêtement à confectionner, puis à souffler dans cet espace, pour le remplir, un mélange constitué par un agrégat, une résine autodurcissable et éventuellement un durcisseur.

7. Procédé selon la revendication 6, caractérisé en ce qu'il consiste à souffler dans l'espace vide (8) un mélange contenant une résine thermodurcissable, à l'aide d'air comprimé, puis, après avoir retiré la forme, à chauffer la surface du revêtement ainsi moulé pour provoquer son durcissement.

8. Composition pour le moulage d'un revêtement par soufflage à l'aide de la forme selon la revendication 1, caractérisée en ce qu'elle comporte de 45 à 97% en poids d'un agrégat ayant une granulométrie inférieure à 3 mm d'ouverture de crible et de 3 à 15% en poids d'un liant constitué par une résine autodurcissable contenant plus de 70% en poids d'ingrédients non volatils à 135° C.

9. Composition selon la revendication 8, caractérisée en ce qu'elle contient de 1,5 à 8% en poids d'un durcisseur à base d'acide xylènesulfonique.

10. Composition selon l'une des revendications 8 ou 9, caractérisée en ce qu'elle contient en outre de 3 à 15% en poids d'un liant constitué par une résine thermodurcissable ayant plus de 70% en poids d'ingrédients non volatils à 135° C.

11. Composition selon la revendication 10, caractérisée en ce que le liant à base de résine thermodurcissable est une résine phénolique contenant moins de 20% en poids d'hexaméthylène tétramine.

12. Composition selon l'une des revendications 8 à 11, caractérisée en ce qu'elle contient de 3 à 15% en poids d'un liant inorganique.

13. Composition selon l'une des revendications 8 à 12, caractérisée en ce qu'elle contient moins de 2% en poids d'un matériau d'isolation thermique.

14. Composition selon l'une des revendications 8 à 13, caractérisée en ce que l'agrégat est choisi dans le groupe comprenant la silice, le sable siliceux, la chamotte, le graphite, l'alumine, le corindon, la mullite, la spinelle, la dolomite, la magnésie, l'oxyde de calcium, l'oxyde de chrome, l'oxyde
de zirconium, la brique et les minerais.

15. Composition selon l'une des revendications
8 à 14, caractérisée en ce que le liant résineux autodurcissable est choisi dans un groupe formé par
les résines phénoliques, les résines furaniques et
les résines polyesters insaturées.

16. Composition selon l'une des revendications
8 à 15, caractérisée en ce que le liant inorganique
est choisi dans un groupe formé par l'heptahydrate
sulfate de magnésium ($MgSO_4 \cdot 7H_2O$), le phosphate de sodium, le métasilicate de sodium, le
phosphate de magnésium, l'acide borique et le borax.

17. Composition selon l'une des revendications
8 à 16, caractérisée en ce que le matériau d'isolation thermique est choisi dans un groupe formé par
l'amiante, la laine de roche, la laine de verre, les
fibres de kaolin, la laine de laitier, les fibres de carbone, les fibres de carbure de silicium, les fibres de
zirconium, la terre d'infusoires, la perlite, l'alumine
creuse, la pierre ponce, la vermiculite, la sciure de
bois, les copeaux de bois, les fibres de cellulose, les
fibres synthétiques, le charbon de bois, la houille et
le coke.

## Patentansprüche

1. Form für das Abformen durch Einblasen einer
inneren Auskleidung in ein Gefäss für schmelzflüs-
sige Metalle, dadurch gekennzeichnet, dass es einen Hauptkörper (3), der mit Einblaslöchern (6a,
6b) und mit einer Auslassöffnung (7) versehen ist,
wobei die periphere Seite und die Innenseite dieses Körpers dieselben Abmessungen und dieselben Formen wie die entsprechenden Innenseiten
der zu formenden Auskleidung besitzen, einen
Flansch (9), der sich von der Peripherie des oberen
Endes des Körpers (3) beinahe horizontal nach
aussen erstreckt, eine Anzahl von Stützen (4), die
zur Unterseite des Flansches hin betätigt sind, und
Dichtungsverbindungen aufweist, die unterhalb
des Flansches angeordnete Dämpfungsvorrichtungen (5) bilden.

2. Form nach Anspruch 1, dadurch gekennzeichnet, dass der Hauptkörper (3) mit einer Totlast versehen ist.

3. Form nach einem der beiden Ansprüche 1
oder 2, dadurch gekennzeichnet, dass der Hauptkörper mit einem Vibrator versehen ist, der
Schwingungen mit einer Frequenz einschliesslich
zwischen 1000 und 10 000 Schwingungen in der
Minute und mit einer Amplitude einschliesslich
zwischen 0,1 und 5 mm erzeugt.

4. Form nach einem beliebigen der Ansprüche
1 bis 3, dadurch gekennzeichnet, dass die Stützen
(4) die Form im Gefäss am oberen Teil desselben
durch den Druck eines Fluids, von Getriebe(n),
Schwingarmen, Hebeln etc. halten und dass sie
ausstreckbare Körper von der Art sind, dass das
gesamte Gewicht der Form durch die Dämpfungsverbindungen abgestützt sind, wobei ihre Länge
auf solche Weise verkürzt werden kann, dass ihre
Tragfähigkeit Null ist.

5. Form nach einem beliebigen der Ansprüche
1 bis 4, dadurch gekennzeichnet, dass jede eine
Dämpfungsvorrichtung bildende Dichtungsverbindung ein durchgehender und elastischer ringförmiger Körper ist.

6. Verfahren zur Ausführung der inneren Auskleidung eines Gefässes, das zur Aufnahme von
schmelzflüssigem Metall bestimmt ist, mittels der
Form nach Anspruch 1, dadurch gekennzeichnet,
dass es daraus besteht, dass die Form in das Gefäss
(1, 2) durch sein offenes Ende eingeführt wird und
dass es dort so positioniert wird, dass zwischen ihr
und dem Gefäss ein Hohlraum ausgespart wird,
der der herzustellenden Auskleidung entspricht,
dass dann in diesen Raum, um ihn zu füllen, ein
durch ein Aggregat, ein selbsthärtbares Harz und
ggf. einen Härter gebildetes Gemisch eingeblasen
wird.

7. Verfahren nach Anspruch 6, dadurch gekennzeichnet, dass es daraus besteht, dass in den
Hohlraum (8) mittels Druckluft ein ein in Wärme
aushärtendes Harz enthaltendes Gemisch eingeblasen wird, dass dann, nachdem die Form zurückgezogen worden ist, die Oberfläche der so geformten Auskleidung erwärmt wird, um ihr Aushärten
hervorzurufen.

8. Zusammensetzung für das Abformen einer
Auskleidung durch Einblasen mittels der Form
nach Anspruch 1, dadurch gekennzeichnet, dass
sie von 45 bis 97 Gew.-% ein Aggregat mit einer
Korngrössenverteilung unterhalb von 3 mm Sieböffnung und von 3 bis 15 Gew.-% ein Bindemittel
aufweist, das durch ein selbsthärtbares Harz gebildet ist, das über 70 Gew.-% bei 135° C nicht
flüchtige Bestandteile enthält.

9. Zusammensetzung nach Anspruch 8, dadurch gekennzeichnet, dass sie von 1,5 bis
8 Gew.-% einen Härter auf Basis von Xylolsulfonsäure enthält.

10. Zusammensetzung nach einem der beiden
Ansprüche 8 oder 9, dadurch gekennzeichnet,
dass sie ausserdem von 3 bis 15 Gew.-% ein Bindemittel enthält, das durch ein in Wärme aushärtendes Harz mit über 70 Gew.-% bei 135° C nicht
flüchtigen Bestandteilen gebildet ist.

11. Zusammensetzung nach Anspruch 10, dadurch gekennzeichnet, dass das Bindemittel auf
Basis eines in Wärme aushärtenden Harzes ein
Phenolharz ist, das zu weniger als 20 Gew.-% Hexamethylentetramin enthält.

12. Zusammensetzung nach einem beliebigen
der Ansprüche 8 bis 11, dadurch gekennzeichnet,
dass sie von 3 bis 15 Gew.-% ein anorganisches
Bindemittel aufweist.

13. Zusammensetzung nach einem beliebigen
der Ansprüche 8 bis 12, dadurch gekennzeichnet,
dass sie zu weniger als 2 Gew.-% ein Wärmeisolierungsmaterial enthält.

14. Zusammensetzung nach einem beliebigen
der Ansprüche 8 bis 13, dadurch gekennzeichnet,
dass das Aggregat aus der Gruppe ausgewählt ist,
die Siliziumoxid, Quarzsand, Schamotte, Graphit,
Aluminiumoxid, Korund, Mullit, Spinell, Dolomit,
Magnesiumoxid, Kalziumoxid, Chromoxid,
Zirkonoxid, (Ziegel-)Stein und die Erze umfasst.

15. Zusammensetzung nach einem beliebigen der Ansprüche 8 bis 14, dadurch gekennzeichnet, dass das harzhaltige, selbsthärtbare Bindemittel aus der Gruppe ausgewählt ist, die durch die Phenolharze, die Furanharze und die ungesättigten Polyesterharze gebildet ist.

16. Zusammensetzung nach einem beliebigen der Ansprüche 8 bis 15, dadurch gekennzeichnet, dass das anorganische Bindemittel aus der Gruppe ausgewählt ist, die durch Magnesiumsulfat-7-Wasser (MgSO$_4 \cdot$7H$_2$O), Natriumphosphat, Natriummetasilikat, Magnesiumphosphat, Borsäure und Borax gebildet ist.

17. Zusammensetzung nach einem beliebigen der Ansprüche 8 bis 16, dadurch gekennzeichnet, dass das Wärmeisolierungsmaterial aus der Gruppe ausgewählt ist, die durch Asbest, Gesteinswolle, Glaswolle, Kaolinfasern, Schlackenwolle, Kohlenstoffasern, Siliziumkarbidfasern, Zirkonfasern, Kieselgur, Perlit, hohles Aluminiumoxid, Bimsstein, Vermiculit, Holzsägemehl, Holzspäne, Zellulosefasern, synthetische Fasern, Holzkohle, Kohle und Koks gebildet ist.

## Claims

1. A core for the blow-moulding of an internal lining of a container for molten metal, characterized in that it comprises a main body (3), equipped with blowing holes (6a, 6b) and an escape orifice (7), the peripheral face and the lower face of this body having the same dimensions and the same shape as the corresponding internal faces of the lining to be moulded, a flange (9) which, starting from the periphery of the upper extremity of the body (3), extends outwards approximately horizontally, a plurality of supports (4) which are actuated towards the base of the flange, and airtight joints forming shock-absorbers (5) placed below the flange.

2. A core according to Claim 1, characterised in that the main body (3) is equipped with a dead weight.

3. A core according to Claim 1 or Claim 2, characterised in that the main body is equipped with a vibrator producing vibrations of a frequency between 1,000 and 10,000 vibrations per minute and with an amplitude between 0.1 and 5 mm.

4. A core according to any Claims 1 to 3, characterised in that the supports (4) support the core in the container and in the upper part of the latter by the pressure of a fluid, or gearing, of pushrods, of levers, etc., and in that they are bodies that can be opened out in such a way that the total weight of the core is supported by the shock-absorber joints, their length being capable of being shortened in such a way that their lifting power becomes zero.

5. A core according to any Claims 1 to 4, characterised in that each airtight joint forming a shock-absorber is a continuous, elastic annular body.

6. A process to produce the internal lining of a container intended to receive molten metal, with the aid of the core according to Claim 1, characterised in that it consists of introducing the said core into the container (1, 2) at its open extremity and of positioning it there so as to produce between itself and the container an empty space corresponding to the lining that is to be produced and then to blow into this space in order to fill it a mixture consisting of an aggregate, a self-hardening resin, and possibly a hardener.

7. A process according to Claim 6, characterised in that it consists of blowing by means of compressed air a mixture containing a thermosetting resin into the empty space (18), then, after having withdrawn the core, of heating the surface of the lining so moulded, in order to bring about its hardening.

8. A composition for the blow-moulding of a lining with the help of the according to Claim 1, characterized in that it comprises 45 to 97% by weight of an aggregate having a great size less than 3 mm mesh aperture, and 3 to 15% by weight of a binder consisting of a self-hardening resin containing more than 70% by weight of ingredients that are not volatile at 135° C.

9. A composition according to Claim 8, characterized in that it contains 1.5 to 8% by weight of a hardener with a basis of xylenesulphonic acid.

10. A composition according to Claim 8 or Claim 9, characterized in that it additionally contains 3 to 15% by weight of a binder formed by a thermosetting resin having more than 70% by weight of ingredients that are not volatile at 135° C.

11. A composition according to Claim 10, characterized in that this binder based on thermosetting resin is a phenolic resin containing less than 20% by weight of hexamethylene tetramine.

12. A composition according to any of Claims 8 to 11, characterized in that it contains 3 to 15% by weight of an inorganic binder.

13. A composition according to any of Claims 8 to 12, characterized in that it contains less than 2% by weight of a thermal insulation material.

14. A composition according to any of Claims 8 to 13, characterized in that the aggregate is selected from the group containing silica, silica sand, fireclay, graphite, alumina, corundum, mullite, spinel, dolomite, magnesia, calcium oxide, chromium oxide, zirconium oxide, brick and ores.

15. A composition according to any of Claims 8 to 14, characterized in that the resinous self-hardening binder is selected from a group formed by the phenolic resins, the furan resins, and the unsaturated polyester resins.

16. A composition according to any of Claims 8 to 15, characterized in that the inorganic binder is selected from a group formed by magnesium sulphate heptahydrate (MgSO$_4 \cdot$7H$_2$O), sodium phosphate, sodium metasilicate, magnesium phosphate, boric acid and borax.

17. A composition according to any of Claims 8 to 16, characterized in that the thermal insulation material is selected from the group formed by asbestos, rock wool, glass wool, kaolin fibre, slag wool, carbon fibre, silicon carbide fibre, zirconium fibre, diatomaceous earth, perlite, hollow aluminia, pumice stone, vermiculite, wood sawdust, wood chips, cellulose fibre, synthetic fibres, charcoal, coal and coke.

# F I G . 1

# F I G . 2